# EUROPEAN PATENT APPLICATION

(11) **EP 1 705 895 A1**
(43) Date of publication of application: **27.09.2006**
(21) Application number: 06251133.2
(22) Date of filing: 02.03.2006
(51) Int. Cl.: H04N 1/32

(54) **Printing apparatus, image processing apparatus, and related control method**

(30) Priority: 23.03.2005 JP 2005084515
(71) Applicant: CANON KABUSHIKI KAISHA, Ohta-ku, Tokyo (JP)
(72) Inventor: Kunori, Shiro c/o Canon Kabushiki Kaisha, Tokyo (JP)
(74) Representative: Legg, Cyrus James Grahame

(57) **Abstract**

The invention provides a printing apparatus, an image processing apparatus, and a related control method, according to which a modified page can be easily identified when a modified document is printed. First document data and second document data modified from the first document data are obtained by a scanner (109) or received via a network (150) from an external apparatus. One page of the first document data is compared with a corresponding page of the second document data. Then, based on a result of comparison, a modified page included in the second document data is identified as a page containing at least one portion different from a corresponding page included in the first document data. Then, only the modified page is printed.

## Description

### BACKGROUND OF THE INVENTION

### Field of the Invention

The present invention relates to a printing apparatus, an image processing apparatus, and a related control method.

### Description of the Related Art

When a user prints a modified document that includes at least one modified page, a user can directly select the modified page (s) to print the selected page (s) only. Otherwise, the user must print all pages of the modified document. However, according to this conventional method, a user must check the presence of any modification in the document and must find a modified page. On the other hand, printing all pages at a time is not desirable, since resources (such as papers and toners) are wasted.

To solve the above problems, a conventional technique (for example, as discussed in Japanese Patent Application Laid-open No. 08-129549), proposes putting an identifier (version information) on each page, and renewing the version in response to each modification of the page. According to this method, the user can selectively print the page(s) having the newest versions.

Another conventional technique (for example, as discussed in Japanese Patent Application Laid-open No. 2002-197101) proposes storing numerous documents each having an identifier (ID) in a server, and printing a document based on the ID. According to this method, a user can obtain a latest document having a newest ID from the server and print the latest document.

However, according to the former conventional method, an apparatus or a system for putting an identifier or additional information on a document is required. Furthermore, according to the latter conventional method, not only is a system for managing the documents each having an ID required, but also performing printing by identifying the modified page is impossible.

### SUMMARY OF THE INVENTION

The present invention is directed to a printing apparatus, an image processing apparatus, and a related control method which can, at least in part, overcome the above-described drawbacks.

According to a first aspect of the present invention, there is provided a printing apparatus as specified in claims 1 to 10.

According to a second aspect of the present invention, there is provided an image processing apparatus as specified in claims 11 to 13.

According to a third aspect of the present invention, there is provided a computer-readable medium as specified in claim 17.

Further features of the present invention will become apparent from the following detailed description of exemplary embodiments, with reference to the attached drawings.

### BRIEF DESCRIPTION OF THE DRAWINGS

The accompanying drawings, which are incorporated in and constitute a part of the specification, illustrate embodiments of the invention and, together with the description, serve to explain the principles of the invention.

Fig. 1 is a block diagram showing a fundamental arrangement of a printing apparatus in accordance with a first embodiment of the present invention.

Fig. 2 is a view showing an example of a GUI (graphical user interface) that displays a table of set data stored in a memory.

Fig. 3 is a flowchart showing print processing in accordance with a first embodiment of the present invention.

Fig. 4 is a view showing an example of a GUI that displays various button images used for print settings.

Fig. 5 is a view showing an example of a GUI that displays various button images used for setting the print processing.

Fig. 6 is a view showing an example of a GUI that displays various button images used for setting comparison conditions.

Fig. 7 is a view showing an example of a GUI that displays comparison result for each page obtained through the comparison processing.

Fig. 8 is a view showing an example of a GUI that displays various button images used for setting print pages.

Fig. 9 is a view showing a page printed based on optional settings.

Fig. 10 is a view showing an example of a GUI that displays an inquiry about whether or not an original document should be overwritten with a modified document.

Fig. 11 is a view showing an example of a GUI that displays a keyboard image allowing a user to enter a password.

Fig. 12 is a flowchart showing print processing in accordance with a second embodiment of the present invention.

### DETAILED DESCRIPTION OF THE EMBODIMENTS

The following description of exemplary embodiments is merely illustrative in nature and is in no way intended to limit the invention, its application, or uses.

Exemplary embodiments can be incorporated into various printing or image processing devices (e.g., monochrome printers, color printers, multifunction peripherals, and other comparable devices as known by one of ordinary skill, and equivalents).

Processes, techniques, apparatus, and materials as known by one of ordinary skill in the art may not be discussed in detail but are intended to be part of the enabling description where appropriate.

Note that similar reference numerals and letters refer to similar items in the following figures, and thus once an item is defined in one figure, it may not be discussed or further defined in the following figures.

Embodiments of the present invention will be described below in detail with reference to the drawings.

First Embodiment

Arrangement of Printing Apparatus

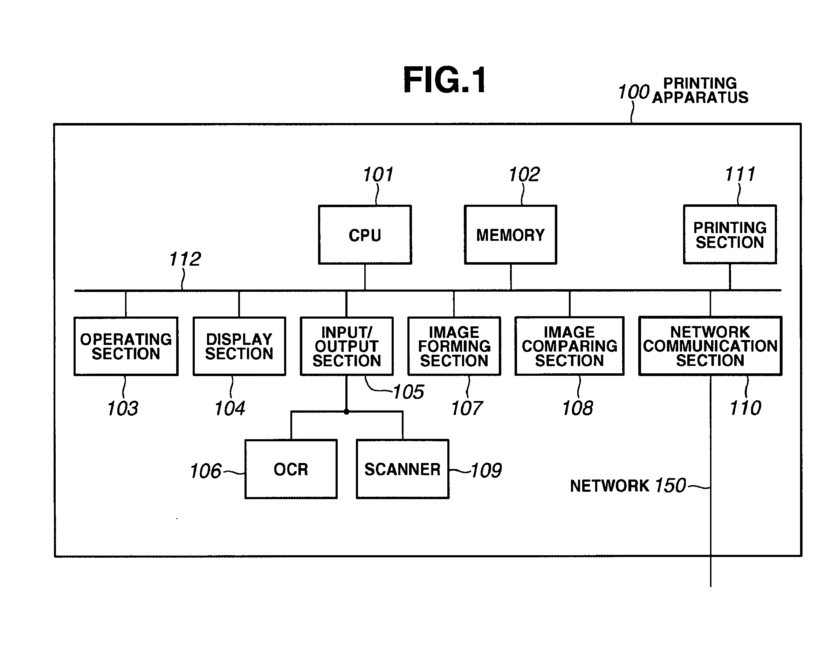

Fig. 1 is a block diagram showing a fundamental arrangement of a printing apparatus in accordance with a first embodiment of the present invention. The fundamental arrangement of a printing apparatus according to the first embodiment is not limited to the arrangement shown in Fig. 1, and accordingly can be modified to include other components functionally equivalent to those disclosed in Fig. 1.

A CPU 101 performs various controls for components constituting a printing apparatus 100. A memory 102 can provide a plurality of memory areas, including an area memorizing and storing programs and related data required for the CPU 101 to execute various controls for the components constituting the printing apparatus 100, an area memorizing and storing programs and related data required for the printing apparatus 100 to execute fundamental operations, a work area required for the CPU 101 that execute various processing, and an area memorizing and storing document data.

An operating section 103 allows a user of the printing apparatus 100 to input various instructions. For example, the operating section 103 includes a group of buttons. A display section 104, for example constructed from a liquid crystal screen, can display various setting screens and results of processing executed by the CPU 101. The display section 104 and the operating section 103 can be integrated together as a touch panel, according to which button images can be displayed on the touch panel.

An input/output section 105 is connected to an OCR (optical character recognition unit) 106 and to a scanner 109. The input/output section 105 can control data communications between the OCR 106 and/or the scanner 109 and various components constituting the printing apparatus 100.

The scanner 109 scans and reads a document recorded or printed on paper or other recording medium, while the OCR 106 recognizes characters of the readout document and converts the document into an assembly of character codes. The OCR 106 outputs an assembly of converted character codes via the input/output section 105 to the memory 102. The memory 102 can store the assembly of the character codes sent from the OCR 106.

An image forming section 107 performs processing for forming an image based on the data obtained from the scanner 109 stored in memory 102. An image comparing section 108 performs comparison processing. A network communication section 110 functions as an interface performing data communications with an external apparatus via a network, such as LAN or Internet.

A printing section 111 performs processing for printing the image formed by the image forming section 107 on paper or other recording media.

The above-described various components are connected with each other by a bus 112. In the present embodiment, Fig. 1 shows a hardware arrangement of the components. However, the OCR 106, the image forming section 107, and the image comparing section 108 can be replaced by software when the memory 102 stores programs of the software. In this case, the CPU 101 reads and executes the programs stored in the memory 102 to realize functions comparable with the OCR 106, the image forming section 107, and the image comparing section 108.

print processing

The printing apparatus 100 performs the processing for printing a modified page only, or for printing a selected number of pages including the modified page where a document is partly modified. In the first embodiment, the scanner 109 reads a modified document that includes partial modification (s) added to an original document. The memory 102 stores, as set data, image data of a readout modified document and recognized data (i.e., a group of character codes) of the readout modified document that can be obtained as a result of recognition performed by the OCR 106 that can recognize the image data of the readout modified document. The printing apparatus 100 prints a modified page only, or pages including the modified page, with reference to the set data stored in the memory 102.

For example, the set data (i.e., a combination of the image data of a modified document scanned and read by the scanner 109 and the recognized data, i.e., a group of character codes, of the readout modified document processed by the OCR 106) can be transmitted via the network communication section 110 from a PC (personal computer) or other external apparatus to the CPU 101, and can be stored in the memory 102.

Furthermore, the memory 102 can store the set data as a file that can be identified by a file name.

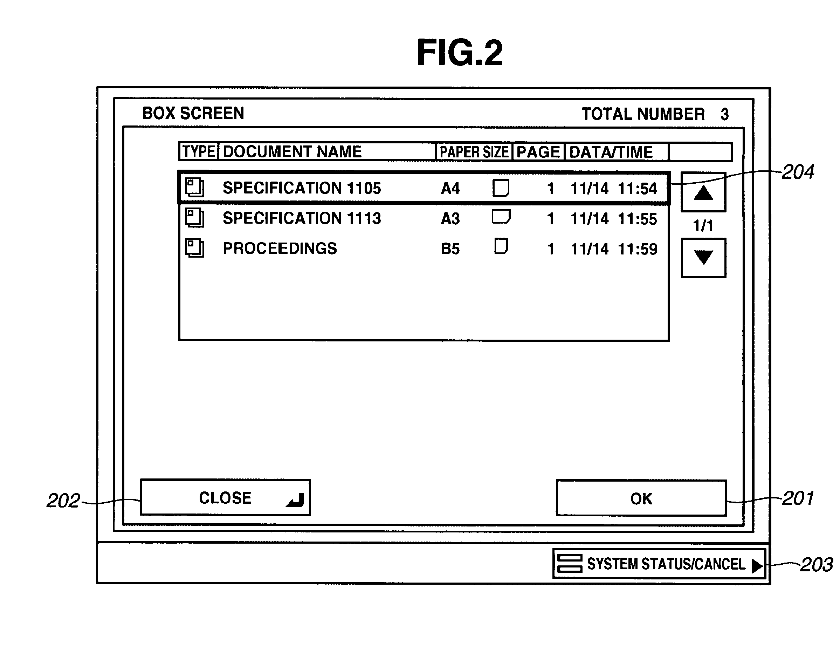

Fig. 2 is a view showing a display example of a GUI (graphical user interface) that displays a table of set data stored in the memory 102. The display section 104 can display, on its display screen, various GUIs (graphical user interfaces) used in the exemplary embodiment including the GUI shown in Fig. 2.

The GUI of Fig. 2 indicates that the memory 102 stores a total of three set data identified by file names "specification 1105", "specification 1113", and "proceedings". Furthermore, with respect to the set data stored in the memory 102, data/time, printing paper size, and total number of printing pages are also displayed on the GUI.

An operator (i.e., a user) of the printing apparatus 100 can select, on the GUI, an object to be printed (i.e., image data of a document contained in the set data). In the first embodiment, the display section 104 is a touch panel type and accordingly the user can touch a region of a print object displayed on the screen with his/her finger to select a printing object. Fig. 2 shows a condition that the set data of "specification 1105" is selected. More specifically, a bold line (indicated by 204) emphasizes a region of the selected set data.

After the printing object is selected, the user can touch a button image 201. The CPU 101, in response to the user' s instruction, designates the selected set data as a printing object (i.e., image data of a document contained in the set data) and controls the display section 104 to display a previous screen.

On the other hand, when the user touches a button image 202, the CPU 101 cancels the above-described selection processing and controls the display section 104 to display the previous screen.

Furthermore, when the user touches a button image 203, the CPU 101 controls the display section 104 in response to the user's instruction to display a system status of the printing apparatus 100 (such as a job status or a JAM status) on its display screen.

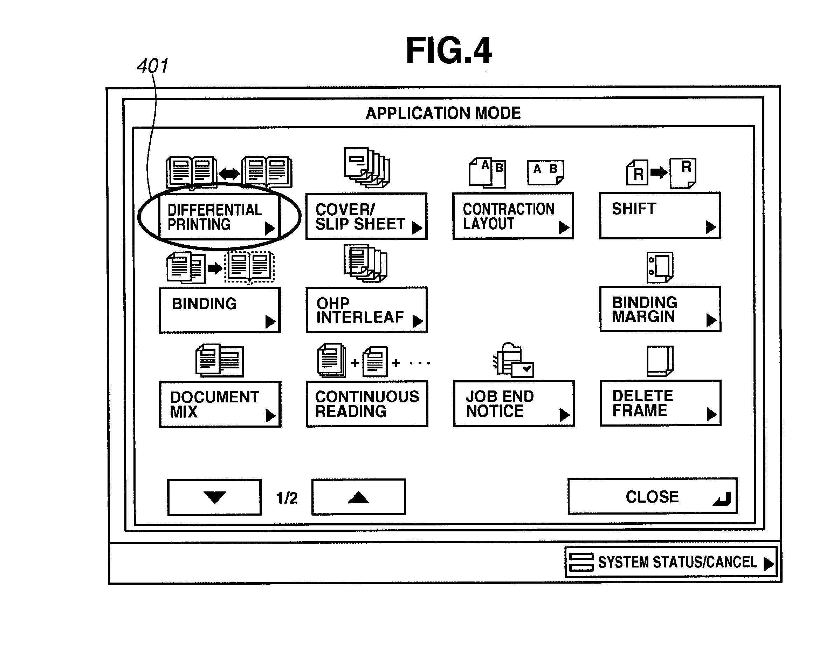

In this manner, after a printing object is selected, the CPU 101 detects any print setting instruction entered by a user through the operating section 103 and controls the display section 104 in response to the user's instruction to display a GUI shown in Fig. 4 on its display screen.

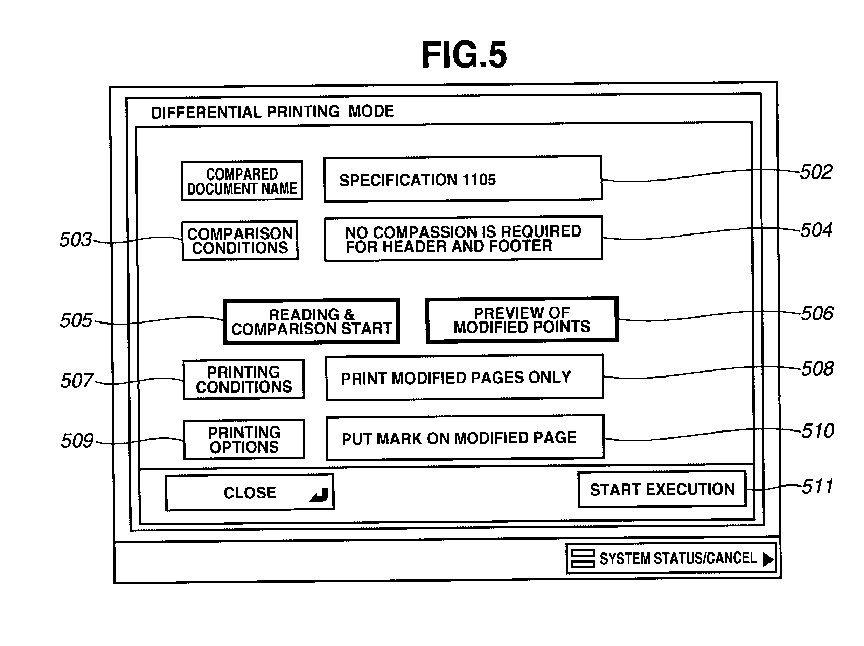

Fig. 4 is a view showing an example of a GUI that displays various button images used for print settings. When a user touches a button image 401 shown in Fig. 4, the CPU 101 controls the display section 104 in response to the user's instruction to display a GUI as shown in Fig. 5 on its display screen.

Fig. 5 is a view showing a GUI example that displays various button images used for setting the differential print processing. In Fig. 5, a region 502 displays a file name of the set data as a printing object. Fig. 5 shows an example including the "specification 1105" as a printing object. Accordingly, the image data of a document in the set data identified by the file name "specification 1105" is designated as a printing object.

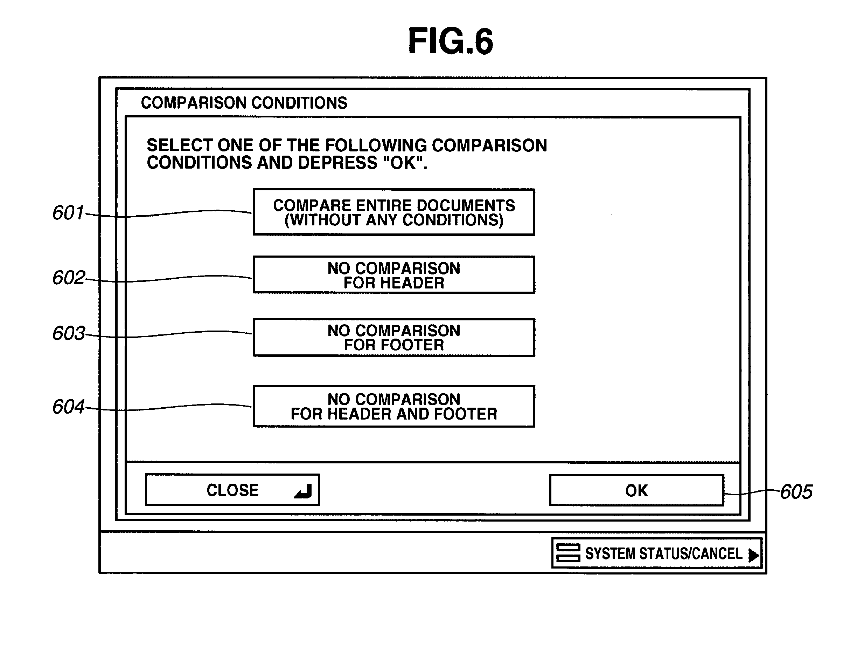

A user can touch a button image 503 when he/she sets conditions for performing a comparison between a document to be printed (i.e., modified document) and an original document of the modified document. When the user of the printing apparatus 100 depresses a button image, the CPU 101 controls the display section 104 in response to the user' s instruction to display a GUI shown in Fig. 6 on its display screen.

Fig. 6 is a view showing an example of a GUI that displays various button images used for setting comparison conditions.

More specifically, as shown in Fig. 6, a user can select one of the options as comparison conditions for comparing the documents. When a user touches a button image 601, the entire documents are compared. When a user touches a button image 602, headers are excluded from the comparison. When a user touches a button image 603, footers are excluded from the comparison. When a user touches a button image 604, both headers and footers are excluded from the comparison.

In the present embodiment, the first option for comparing entire documents (i.e., corresponding to the button image 601) is the default settings being set beforehand.
However, the default settings can be changed freely.

Furthermore, designating the portion(s) to be compared is not limited to a particular method and can be changed in various ways. For example, it is possible to allow a user to directly touch the portion(s) to be compared on the GUI. Furthermore, it can also be set that the lower regions of the documents (i.e., X inch from the bottom) are excluded from the comparison.

Once the comparison conditions are set on the GUI shown in Fig. 6, the user can depress a button image 605. The CPU 101 controls the display section 104 in response to the user's instruction to display the GUI of Fig. 5 on its display screen. On the GUI of Fig. 5, a region 504 displays the comparison conditions having been selected.

Then, a user can touch a button image 505 on the GUI of Fig. 5. The CPU 101 controls the scanner 109 in response to the user' s instruction to start reading an original document which corresponds to a document contained in the set data selected on the GUI of Fig. 2. The OCR 106 recognizes characters of the original document based on obtained image data. The memory 102 stores the recognized result, i.e., an assembly of character codes.

Storing the assembly of character codes of the original document into the memory 102 is not limited to a particular method. For example, an assembly of character codes of an original document can be received from a PC (personal computer) or other external apparatus via the network communication section 110 to the CPU 101 and can be stored in the memory 102.

The CPU 101 can store, in the memory 102, an assembly of character codes of the original document corresponding to one page. Then, the CPU 101 controls the image comparing section 108 to compare the assembly of character codes corresponding to the stored page with an assembly of character codes of a corresponding page of a modified document. The CPU 101 executes the comparison processing (i.e., compares portions mutually agreed in position) from a head portion of each page and determines whether or not compared character codes are identical with each other.

When there are any portions different from each other, the memory 102 stores comparison result information, including the number of the page including non-matched character codes in the original document, and the position of the character codes in this page, as well as the number of the page including non-matched character codes in the modified document, and the position of the character codes in this page.

The CPU 101 performs the above-described comparison processing every time character codes of the original document corresponding to one page is stored in the memory 102. Thus, the information relating to the page number and the position in the page with respect to the non-matched character codes can be obtained for each of the original document and the modified document.

The CPU 101 skips or cancels the above-described comparison processing for the "portion(s) requiring no comparison" being set on the GUI of Fig. 6.

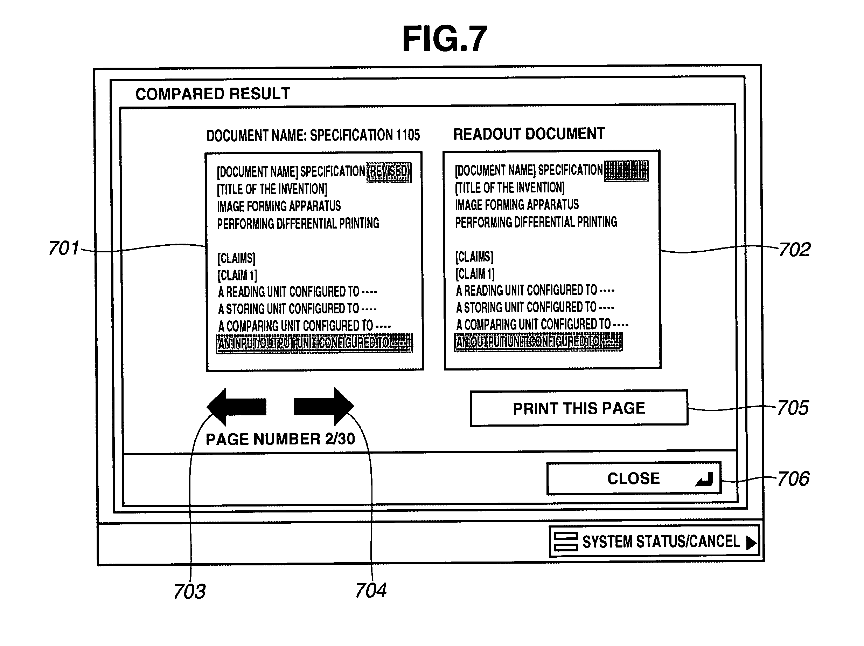

When the above-described comparison processing has been accomplished for all of the pages, the user can touch a button image 506. The CPU 101 controls the display section 104 in response to the user's instruction to display a GUI shown in Fig. 7 on its display screen.

Fig. 7 is a view showing an example of a GUI that displays comparison result for each page obtained through the comparison processing.

In Fig. 7, a region 701 displays a second page of the modified document (more specifically, a string of character codes constituting the second page of the modified document). A region 702 displays a second page of the original document (more specifically, a string of character codes constituting the second page of the original document). In respective regions 701 and 702, highlighted and underlined portions mutually corresponding in position indicate non-matched portions.

Of the character codes constituting the second page of the original document, the CPU 101 can store, in the memory 102, the position of non-matched character codes in the second page of the original document that has been detected in the above-described comparison processing. The CPU 101 can emphasize the display for the characters displayed based on the character codes of this position to discriminate them from other characters in the second page of the original document.

Similarly, of the character codes constituting the second page of the modified document, the CPU 101 can store, in the memory 102, the position of non-matched character codes in the second page of the modified document. The CPU 101 can emphasize the display of the characters displayed based on the character codes of this position to discriminate them from other characters in the second page of the modified document. The method for emphasizing the display of characters is not limited to the display shown in Fig. 7.

Furthermore, the user can touch button images 703 and 704 to select and display other pages of respective documents in the regions 701 and 702. The method for emphasizing mutually different portions in respective documents can be used.

When the user touches the button image 705, the CPU 101 stores in its memory 102 a page number of the page displayed in the region 701 to print the modified page of the modified document.

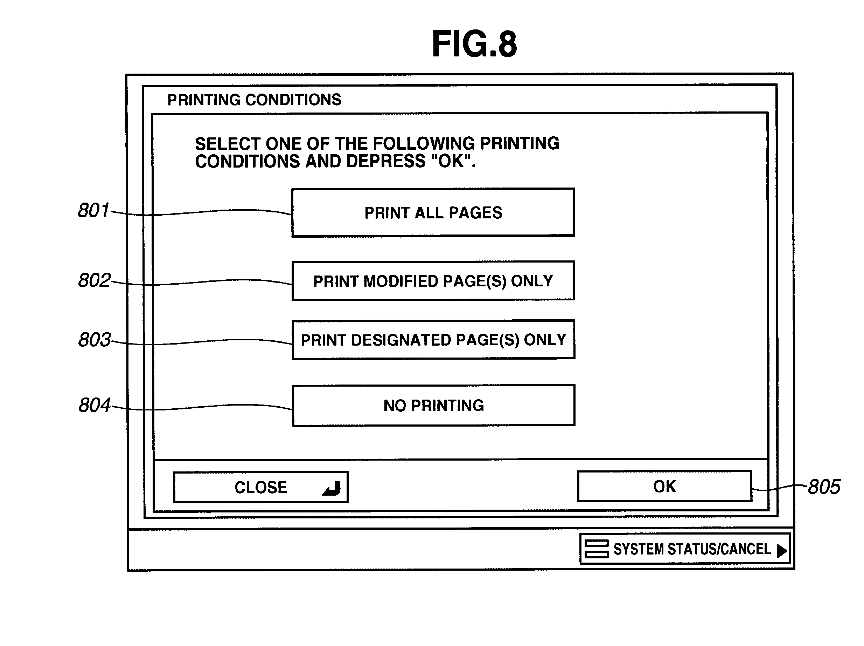

When the user touches a button image 706, the CPU 101 controls the display section 104 to display the GUI shown in Fig. 5 on its display screen. At this moment, the user can touch a button image 507. The CPU 101 controls the display section 104 in response to the user's instruction to display a screen shown in Fig. 8.

Fig. 8 is a view showing an example of a GUI that displays various button images used for setting print pages. The user can select one of printing conditions on the GUI shown in Fig. 8. When the user touches a button image 801, the printing apparatus 100 prints all of the pages constituting the modified document. When the user touches a button image 802, the printing apparatus 100 prints only modified page (s) of the modified document. When the user touches a button image 803, the printing apparatus 100 prints only designated page(s) of the modified document. When the user touches a button image 804, the printing apparatus 100 prints no pages.

In response to user' s instruction through the button image 802, the CPU 101 determines, as a printing object page, the page identified by "the number of the page including the non-matched character codes of the modified document" that was stored in the memory 102 in the above-described comparison processing. Furthermore, in response to user's instruction through the button image 803, the CPU 101 determines, as a printing object page, the page identified by the page number stored in the memory 102 when the user touched the above-described button image 705.

Although the printing apparatus 100 prints the modified pages only according to the default settings, the default settings can be changed freely. When the user touches a button image 805, the CPU 101 controls the display section 104 to display the screen of Fig. 5 on its display screen. A region 508 shown in Fig. 5 displays the print page information having being set.

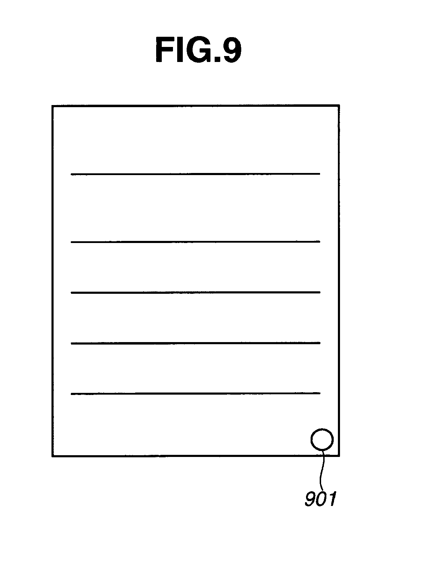

When the user touches a button image 509, the CPU 101 performs optional settings for the printing processing. In the first embodiment, an instruction such as "print a predetermined mark (e.g., o) at a corner of the modified page" can be set as an option. Fig. 9 is a view showing a printed page according to the optional settings. As apparent from Fig. 9, the mark "○" indicated by numeral 901 is printed at the lower right corner of the page. The modified page(s) including the mark "○" can be easily identified by the user. Thus, the user can replace the modified page(s) with newly printed page(s).

To clearly show the presence of any modification (s), the present embodiment prints the mark "○" at the lower right corner of a modified page of the original document. However, it is possible to select either the modified document or the original document depending on the printing apparatus or the setting contents and print arbitrary character (s), numerals or signs (e.g., page number or date) at an arbitrary position of an arbitrary page.

The default settings for the printing apparatus 100 include "no options", although the default settings can be changed freely. A region 510 shown in Fig. 5 displays the optional contents having been set.

The user can touch a button image 511. The CPU 101 controls the printing section 111 in response to the user's instruction to print the instructed page(s) of the modified document. If putting a mark on each modified page is selected as an option, the mark is printed on newly printed page(s) . In the print processing, the image forming section 107 produces an image based on the image data of the modified document obtained by the scanner 109 and then the printing section 111 prints a document on paper or other recording media based on the image produced from the image forming section 107.

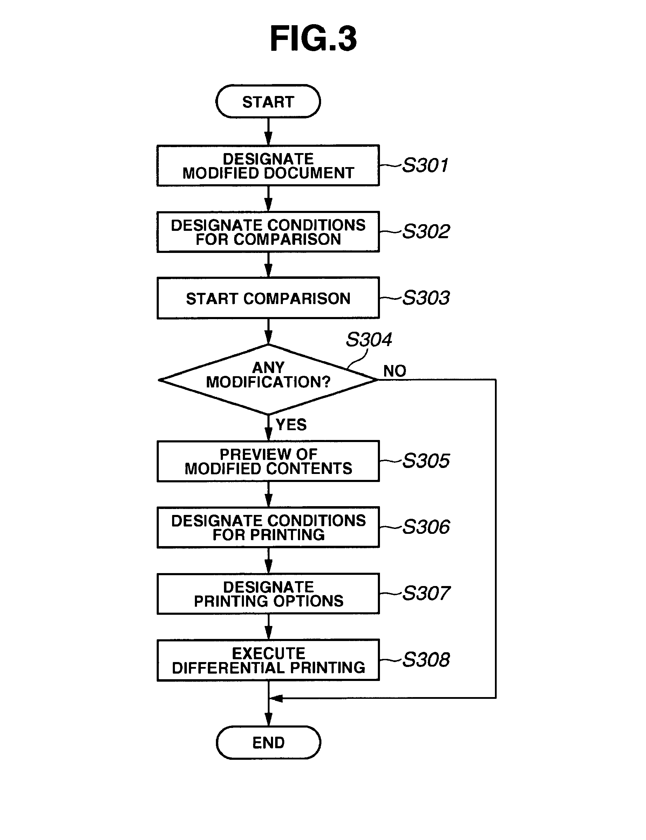

Fig. 3 is a flowchart showing the print processing in accordance with the above-described first embodiment. The memory 102 stores programs and related data required for the CPU 101 to execute the processing shown in the flowchart of Fig. 3. The CPU 101 executes the processing so that the printing apparatus 100 can perform the following operations.

First, a user inputs an instruction through the operating section 103 to display a GUI that allows the user to select a printing object document. The CPU 101 controls the display section 104 in response to the user's instruction to display the GUI of Fig. 2 on its display screen. The user can select an intended printing object document on the GUI. Then, the user touches the button image 201. The CPU 101 determines set data corresponding to the selected document as a printing object (refer to step S301).

After the user has touched the button image 201 on the GUI of Fig. 2, the user can input instructions necessary for the print settings through the operating section 103. The CPU 101 controls the display section 104 in response to the user's instruction to display the GUI of Fig. 4 on its display screen. Then, the user can touch the button image 401. The CPU 101 controls the display section 104 in response to the user's instruction to display the GUI of Fig. 5 on its display screen.

Then, the user can touch the button image 503. The CPU 101 controls the display section 104 in response to the user's instruction to display the GUI of Fig. 6 on its display screen. The user can touch any one of the button images 601 to 604 to select comparison conditions and then touch the button image 605. The CPU 101 confirms and determines the instructed comparison conditions in response to the user' s instruction and controls the display section 104 to display the GUI of Fig. 5 on its display screen (refer to step S302).

Next, the user can touch the button image 505. The CPU 101 controls the scanner 109 and the OCR 106 in response to the user' s instruction to read an original document through the scanner 109 and store image data of the original document in the memory 102. The OCR 106 recognizes and converts the image data into character codes. The character codes are newly stored in the memory 102 (refer to step S303).

In this processing, the OCR 106 stores in the memory 102 an assembly of character codes of the original document corresponding to one page. The image comparing section 108 compares the recognized character codes of this page with character codes of a corresponding page of the modified document, i.e., the document involved in the set data selected in the step S301 (refer to step S303).

More specifically, an Nth page of the original document is compared with an Nth page of the modified document (N=1, 2, 3 ...). The CPU 101 executes the above-described comparison processing for each page, and stores the result of the comparison processing in the memory 102, including the number of the page including non-matched character codes in the original document and the position of the character codes in this page, as well as the number of the page including non-matched character codes in the modified document and the position of the character codes in this page.

After the comparison processing for all pages is accomplished, the processing routine proceeds to step S304 to determine whether or not there is any modification in at least one page of the original document and the modified document (refer to step S304). When there is no modification (i.e., NO in step S304), the CPU 101 terminates this routine. When there is any modification (i.e., YES in step S304), the processing routine proceeds to step S305.

Then, the user can touch the button image 506. The CPU 101 controls the display section 104 in response to the user's instruction to display the GUI (i.e., preview screen) of Fig. 7 on its display screen (refer to step S305). When the user did not touch the button image 506, the CPU 101 skips the processing of this step.

Then, the user can touch the button image 706 on the screen. The CPU 101 controls the display section 104 in response to the user's instruction to display the GUI of Fig. 5 on its display screen. The user can touch the button image 507 on the GUI. The CPU 101 controls the display section 104 in response to the user' s instruction to display the GUI of Fig. 8 on its display screen. The user can touch any one of the button images 801 to 804 to select desirable comparison conditions and then touch the button image 805.

The CPU 101 confirms and determines the instructed printing conditions in response to the user's instruction and controls the display section 104 to display the GUI of Fig. 5 on its display screen (refer to step S306).

Then, the user can touch the button image 509 to select a desirable option. The CPU 101 confirms and determines the instructed option in response to the user's instruction (refer to step S307).

Then, the user can touch the button image 511. The CPU 101 controls the image forming section 107 and the printing section 111 in response to the user' s instruction to print the instructed page (s) of the modified document (refer to step S308). The print operation is carried out based on the settings including the option set by the user.

The flowchart of Fig. 3 can be modified in such a manner that the processing of steps S306 and S307 precedes the processing of step S303. When there is no difference between the original document and the modified document, the CPU 101 abandons all of the contents set on the differential printing mode screen (Fig. 5) and terminates the differential printing mode.

In the above-described embodiment, the CPU 101 designates the modified document stored beforehand in the memory 102 and compares it with the original document read by the scanner 109. However, the comparison method is not limited to a particular one. For example, the original document can be read first by the scanner 109 and stored in the memory 102, or can be received via the network communication section 110 from an external apparatus and stored in the memory 102.

In this case, the steps S301 to S303 of Fig. 3 can be modified in the following manner. First in the step S301, "designate original document" is substituted for "designate modified document". Then, the modified document is read by the scanner 109 or received via the network communication section 110 from the external apparatus. Finally in the step S303, the original document and the modified document are compared.

Furthermore, in the above-described embodiment, the comparison between an original document and a correspondingly modified document is performed every time the scanner 109 has finished reading one page of the original document. However, the comparison method is not limited to a particular one. For example, the scanner 109 can finish reading all pages of the original document and the memory 102 can store the compared data, before the image comparing section 108 performs the comparison in the step S303 of Fig. 3.

As is apparent from the above description, the first embodiment can easily identify the presence of any difference, i.e., different page(s), in the comparison between a modified document and an original document, without relying on additional information other than the document data. When there is any modified page(s), only the modified page(s) or pages including the modified page(s) can be printed.

Furthermore, when a modified document is received via the network communication section 110 from an external apparatus, an already printed original document can be read by the scanner 109 and compared with the received document to identify and print one or more modified page(s). With this processing, only the modified page (s) of the modified document can be printed without performing duplicated printing for the remaining pages of the original document. Thus, useful resources (such as toners and papers) can be saved.

Second Embodiment

A user may modify, by handwriting, a printed document printed based on image data of a document (i.e., an original document) stored in the memory 102. The second embodiment enables renewing (i.e., overwriting) the document stored in the memory 102 with a user's modified document.

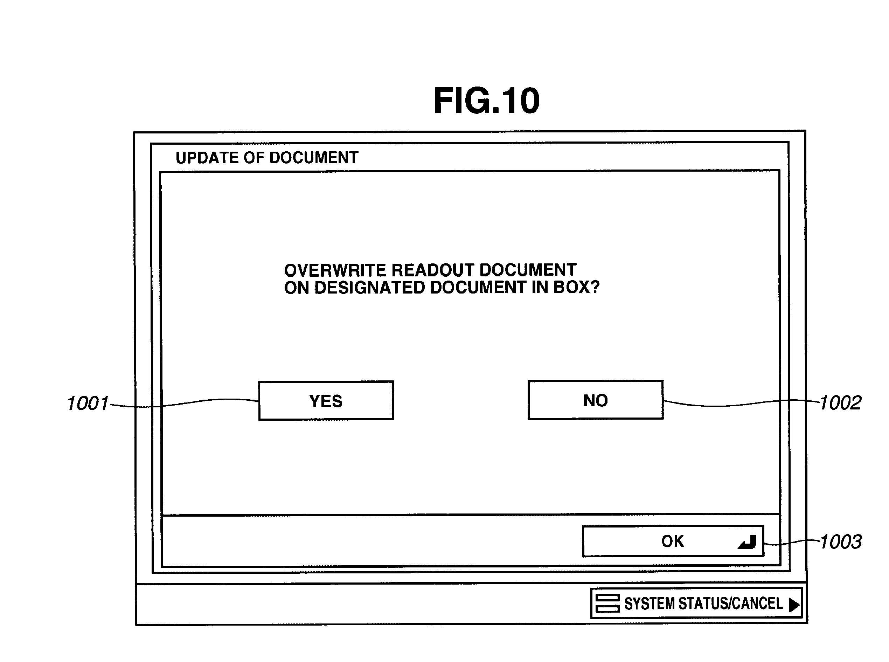

To this end, after accomplishing the processing shown in the flowchart of Fig. 3, the CPU 101 controls the display section 104 in response to a user's instruction to display a GUI shown in Fig. 10 on its display screen. In the first embodiment, the CPU 101 designates the modified document stored beforehand in the memory 102 and controls the scanner 109 to read the original document, as explained with reference to the flowchart shown in Fig. 3.

The second embodiment differs in operation from the first embodiment. In the second embodiment, first of all, the CPU 101 stores an original document in the memory 102. Then, the CPU 101 inputs a modified document and compares it with the stored document.

More specifically, in the step S301 of Fig. 3, a user can designate an original document through the operating section 103. Then, in the step S303, the CPU 101 controls the scanner 109 and the OCR 106 to read the modified document and store the image data in the memory 102. The OCR 106 recognizes and converts the image data into character codes. The character codes are newly stored in the memory 102.

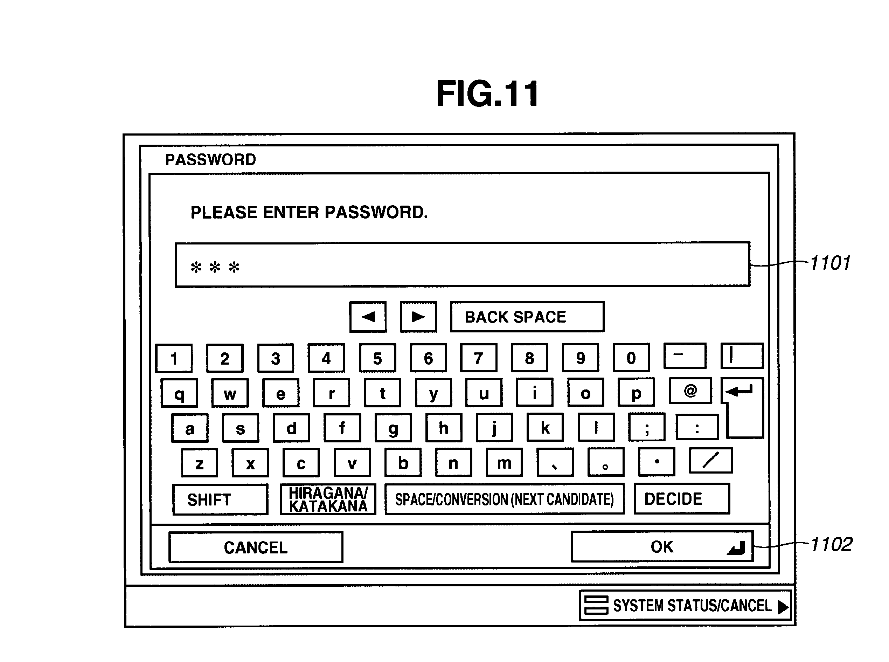

Fig. 10 is a view showing an example of a GUI that displays an inquiry about whether or not the original document should be overwritten with the modified document. The user can touch a button image 1001 to renew the stored document, and then can touch a button image 1003. The CPU 101 controls the display section 104 in response to the user's instruction to display a GUI shown in Fig. 11 on its display screen.

Fig. 11 is a view showing an example of a GUI that displays a keyboard image that allows the user to enter a password. Although the second embodiment requires user's entering a password to renew the stored document, the method is not limited to this particular example.

The user can touch any button images of the keyboard on the GUI of Fig. 10 to input a password. A string of symbols "****" representing the entry of a password is displayed in a region 1101. Then, the user can touch a button image 1102. In response to the user's instruction, the CPU 101 compares the entered password with a registered password stored beforehand in the memory 102. When the entered password agrees with the registered password, the CPU 101 renews (i.e., overwrite) the original document with the modified document. In this processing, both of the image data and the character codes are renewed.

On the other hand, the user can touch a button image 1002 when no renewal of the stored document is required and then can touch the button image 1003. In response to the user's instruction, the CPU 101 does not execute the renewal processing.

For the above-described renewal processing, it is possible for the CPU 101 to perform the processing between the documents stored in the memory 102.

As described above, the second embodiment can easily overwrite the original document stored beforehand in the memory 102 with the modified document.

For example, to simplify the overwrite processing, it is possible to overwrite only the page (s) including different contents (i.e., modified page(s)). Furthermore, when any version management for each paragraph of a page or a document is feasible, only the modified page (s) can be overwritten with the latest version.

Third Embodiment

Although not described in detail, the printing apparatus 100 of the first or second embodiment has only one discharge port (or opening) from which a recording medium on which the recording result is printed is discharged. On the other hand, a printing apparatus according to the third embodiment has two discharge ports (or openings). Of a plurality of pages constituting the modified document, the printing apparatus discharges the modified page(s) from one discharge port and the original page(s) from other discharge port.

The printing apparatus 100 according to the third embodiment has the capability of delivering a page (i.e., one page of a document) placed in an ADF (Automatic Document Feeder) equipped for the scanner 109 to a designated discharge port or feeding a sheet discharged in the discharge port of the ADF to a designated discharge port.

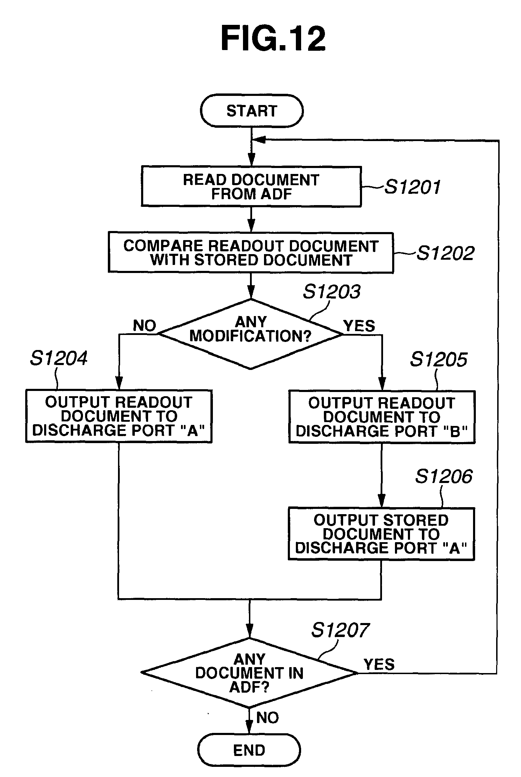

Fig. 12 is a flowchart showing the print processing in accordance with the third embodiment. The CPU 101 executes the processing shown in the flowchart of Fig. 12 after accomplishing the processing of the steps S301 and S302 shown in Fig. 3.

First, the scanner 109 reads each page of an original document placed in the ADF and obtains image data of the readout page. The OCR 106 recognizes and converts the image data into character codes. The character codes are newly stored in the memory 102 (refer to step S1201). The CPU 101 compares the character codes of the readout page with "an assembly of character codes of a corresponding page in the modified document" stored in the memory 102 (refer to step S1202).

Then, the CPU 101 determines whether or not there is any modification in the comparison between two pages (refer to step S1203). The processing in the steps S1202 and S1203 is substantially identical with the above-described processing in the steps S302 and S303 and accordingly will not be explained in detail.

When there is no modification (i.e., NO in step S1203), the processing routine proceeds to step S1204 to print the image data of the original document obtained in the step S1201 on a printed sheet and output the sheet from a discharge port A (i.e., one discharge port). On the other hand, when there is any modification (i.e., YES in step S1203), the processing routine proceeds to step S1205 to print the image data of the original document obtained in the step S1201 on a printed sheet and output the sheet from a discharge port B (i.e., other discharge port).

Similar to the step S308, the CPU 101 controls the image forming section 107 and the printing section 111 to print the instructed page(s), i.e., modified page (s), of the modified document (refer to step S1206). In other words, the instructed page (s) are the page (s) to be printed when the user touches the button image 802 shown in Fig. 8.

Next, the CPU 101 checks whether or not any page (document) remains in the ADF (refer to step S1207). If there is any page (document) in the ADF (i.e., YES in step S1207), the processing routine returns to the step S1201 and repeat the above-described processing.

With the above-described processing, based on the comparison between the original document and the modified document, the printing apparatus 100 can print and output the page (i.e., one page of the original document with respect to the non-modified pages and can print and output the modified document with respect to the modified page(s).

Similar to the first embodiment, various conditional settings and optional settings can be performed in the present embodiment.

Furthermore, the above-described embodiments can compare each page of a memorized document with a corresponding page of a readout (i.e., scan & OCR) document, and can easily print only the modified page (s) without putting any additional information or without providing any apparatus or system.

In particular, when a plurality of chapters are dissected in different pages of a document (such as a specification), the embodiments of the present invention can reduce a total number of printed pages to a minimized number of chapters even when two or more consecutive pages are affected due to the modification.

Furthermore, the above-described embodiments can compare the documents being read from a paper original without requiring original files created by application software, and therefore can easily identify the modified page(s).

Furthermore, the above-described embodiments can renew the modified page(s) of the modified document with the corresponding page(s) of the original document to constantly store the latest document.

Alternatively, it is possible to successively memorize the version information of the modified page(s) in connection with the information of the page(s) to be replaced from the original document each time the comparison processing is completed, so that a desired version of the document can be arbitrarily printed. Thus, a required storage region can be minimized.

Furthermore, it is possible to print the modified portion(s) with a different color if the printing apparatus is a color printer, so that a user can easily recognize the modified portion(s) on the replaced page(s).

Furthermore, in the above-described embodiments, the scanner 109 obtains image data of a document and the OCR 106 recognizes and converts the image data into character codes. The recognized character codes are required to identify modified page(s). However, this processing can be modified in various ways. For example, the method for comparing the documents can be replaced with a method for comparing image data.

In this case, the image data can be expanded into bit-map images and can be compared using conventional graphic recognition techniques. Therefore, the embodiments of the present invention enable even a printing apparatus having no OCR function to simply identify the modified page (s) using the above-described method.

Further Embodiment

According to the present invention, the software program(s) realizing the above-described functions of the present embodiments can be supplied to a system or an apparatus by means of a recording medium. A computer (CPU or MPU) of the system or the apparatus can read and execute the program codes supplied from the recording medium to realize the functions of the present embodiments.

In this case, the equivalents of programs can be used if they possess comparable functions. Accordingly, when the functions or processing of the present invention can be realized by a computer, program codes installed in the computer and a recording medium storing the programs are the means for realizing the present invention.

In other words, the present invention encompasses the computer programs (the program codes) that can realize the functions or processing of the present invention or any recording medium that can store the program(s) . In this case, the type of program(s) can be selected from any one of object codes, interpreter programs, and OS script data. A recording medium supplying the program(s) can be selected from any one of flexible disk, hard disk, optical disk, magneto-optical disk, MO, CD-ROM, CD-R, CD-RW, magnetic tape, nonvolatile memory card, ROM, and DVD (DVD-ROM, DVD-R).

The method for supplying the program(s) includes a method of accessing a home page on the Internet using the browsing function of a client computer, when the home page allows each user to download the computer programs of the present invention, or compressed files of the programs having automatic installing functions, to a hard disk or other recording medium of the user.

Furthermore, the program codes constituting the program(s) of the present invention can be divided into a plurality of files so that respective files are downloadable from different home pages. Namely, the present invention encompasses WWW servers that allow numerous users to download the program files so that the functions or processing of the present invention can be realized on their computers.

Furthermore, enciphering (or encrypting using a cryptosystem) the programs of the present invention and storing the enciphered programs in a CD-ROM or comparable recording medium is a practical method when the programs of the present invention are distributed to users. The authorized users (i.e., users satisfying predetermined conditions) are allowed to download key information from a home page on the Internet. The users can decipher the programs with the obtained key information, and can install the programs on their computers. When the computer reads and executes the installed programs, the functions of the above-described embodiments can be realized.

Furthermore, based on an instruction of the program, the operating system running on the computer may execute part or all of the processing so that the functions of the above-described embodiments can be realized.

Furthermore, the program read out of a recording medium can be written into a memory of a feature expansion board provided in a computer, or into a memory of a feature expansion unit connected to the computer. In this case, based on an instruction of the program, the CPU provided on the feature expansion board or the feature expansion unit can execute part or all of the processing so that the functions of the above-described embodiments can be realized. In case of applying the present invention to the recording medium, the recording medium stores the program codes corresponding to the flow chart described above.

As described above, the modified page (s) can be easily identified when the modified document is printed.

While the present invention has been described with reference to exemplary embodiments, it is to be understood that the invention is not limited to the disclosed exemplary embodiments. The scope of the following claims is to be accorded the broadest interpretation so as to encompass all modifications, equivalent structures and functions.

This application claims priority from Japanese Patent Application No. 2005-084515 filed March 23, 2005, which is hereby incorporated by reference herein in its entirety.

## Claims

1. A printing apparatus comprising:
printing means (111) configured to print document data;
storage means (102) to store document data corresponding to one or more documents;
comparing means (108) configured to compare first document data corresponding to an original document with second document data corresponding to a modified document; and
control means (101) configured to control the printing means, based on a result of comparison performed by the comparing means, to perform printing of a page included in the second document data that contains at least one portion different from a corresponding page included in the first document data, and perform no printing for non-modified pages included in the second document data.

2. The printing apparatus according to claim 1, further comprising first (109) and second (150) obtaining means for obtaining said first and second document data.

3. The printing apparatus according to claim 2, wherein the first obtaining means comprises a reading apparatus.

4. The printing apparatus according to claim 2 or 3,
wherein the second obtaining means receives the second document data from an external apparatus.

5. The printing apparatus according to any preceding claim,
wherein the comparing means compares one page of the first document data with a corresponding page of the second document data.

6. The printing apparatus according to any preceding claim, further comprising display means (104) configured to display the result of comparison performed by the comparing means.

7. The printing apparatus according to claim 6, wherein the display means displays contents of at least one of the first document data and the second document data and emphasizes the display for a modified portion of the compared document data.

8. The printing apparatus according to claim 6, wherein the control means controls the printing means to print one or more modified pages selected by a user based on comparison results displayed on the displaying means.

9. The printing apparatus according to any preceding claim, further comprising a setting means (103) configured to designate portions of the document data to be compared by the comparing means, wherein the comparing means compares the portions designated by the setting means in the comparison between the first document data and the second document data.

10. The printing apparatus according to claim 9, wherein the setting means designates whether or not a header or a footer is to be compared by the comparing unit.

11. An image processing system comprising:
reading means (109) configured to read a document from a recording medium and input readout document as first document data;
storage means (102) configured to store second document data modified from the first document data;
comparing means (108) configured to compare the first document data input by the reading means with the second document data stored in the storing means; and
identifying means (101) configured to identify, based on a result of a comparison performed by the comparing means, a modified page included in the second document data that contains at least one portion different from a corresponding page included in the first document data.

12. The image processing system according to claim 11, further comprising display means (104) configured to display the page identified by the identifying means so that the modified page can be distinguished from non-modified page.

13. The image processing apparatus according to claim 11 or 12, further comprising a printing means (111) configured to print the page identified by the identifying means so that the modified page can be distinguished from non-modified page.

14. A method for controlling a printing apparatus equipped with a printing means that prints document data, the method comprising:
a first obtaining step of obtaining first document data;
a second obtaining step of obtaining second document data modified from the first document data;
a comparing step of comparing the first document data obtained in the first obtaining step with the second document data obtained in the second obtaining step; and
a control step of controlling the printing means, based on a result of comparison performed in the comparing step, to perform printing for a modified page included in the second document data that contains at least one portion different from a corresponding page included in the first document data.

15. A method as claimed in claim 14, in which the printing means is controlled such as to perform no printing for non-modified pages included in the second document data.

16. A method for controlling an image processing apparatus comprising:
a reading step of reading a document from a recording medium and inputting readout document as first document data;
a storing step of storing second document data modified from the first document data;
a comparing step of comparing the first document data input in the reading step with the second document data stored in the storing step; and
an identifying step of identifying, based on a result of comparison performed in the comparing step, a modified page included in the second document data that contains at least one portion different from a corresponding page included in the first document data.

17. A computer-readable medium storing instructions which, when loaded into a computer and executed, perform a method as claimed in any one of claims 14 to 16.
